# EUROPÄISCHE PATENTANMELDUNG

(11) **EP 3 892 848 A1**
(43) Veröffentlichungstag der Anmeldung: **13.10.2021**
(21) Anmeldenummer: 20000145.1
(22) Anmeldetag: 07.04.2020
(51) Int. Cl.: F03B 13/18

(54) **MEERES WELLEN-KRAFTWERK ZUR ERZEUGUNG ELEKTRISCHER ENERGIE MITTELS ARCHIMEDISCHER SCHRAUBE**

(71) Anmelder: Grossmann, Johann (Hans), 68723 Schwetzingen (DE)
(72) Erfinder: Grossmann, Johann (Hans), 68723 Schwetzingen (DE)

(57) **Zusammenfassung**

Die Erfindung zeigt ein neuartiges Kraftwerk zur Erzeugung von elektrischen Strom durch die Ausnutzung der kinetischen Energie von Meereswellen, Im Gegensatz zu bekannten: Propeller/ Wellensegel/ hydraulischen, oder anderen Systemen, nutzt eine geneigt liegende Archimedische Schraube die Wellenenergie, der an den Strand auflaufenden Meereswellen effizient und simpel aus. Durch die Schubkraft der Meereswellen in Ufernähe, die das Wasser auf die Schneckengänge ausübt, gerät die Archimedische Schraube in eine Rotation, wodurch ein Generator angetrieben wird, welcher elektrischen Strom erzeugt. Der Generator-Rotor ist mit der Archimedischen Schraube gekoppelt. Der Generator-Stator ist mit einer Halterung am Meeresboden verbunden; Durch deren Kugelgelenk sind seitliche.-und Höenbewegungen möglich, ohne das der Stator sich dreht. Das gleiche System: Kugelgelenk, wird beim Abstandshalter angewandt. Entsprechende Dichtungen, eventuelle Getriebe, Kupplungen und Flansche ermöglichen die Zerlegung in einzelne wasserdichte Bauteile. Ein Unterwasserkabel leitet den elektrischen Strom zum Strand, (siehe Zeichnung). Auf die elektrische Regelung wird hier nicht eingegangen.

Die vorstehende Konstruktion benötigt kein Einlaufbauwerk und kann sich, selbstjustierend, höhenmäßig, als auch seitlichen Wellenbewegungen anpassen. Das Meereswellenkraftwerk ist ungefährlich für Fische, durchlässig für Sedimente und Treibgut.

## Beschreibung

### • Technisches Gebiet

Die vorliegende Erfindung betrifft eine neuartige Vorrichtung zur Erzeugung elektrischer Energie mittels eines Meereswellen-Kraftwerkes. Die Besonderheit liegt in einem neuen Einsatzbereich der bekannten Archimedischen Schraube / Wasserkraftschnecke.

### • Stand der Technik

Bekannt sind viele Geräte und Systeme zur Ausnutzung der Meereswellenenergie.
Neu ist die Nutzung der Meereswellen- Energie im Meeres- Uferbeneich durch eine Archimedische Schraube in geneigter Lage.

### • Darstellung der Erfindung

Im Gegensatz zu bekannten: Propeller/Wellensegel/hydraulischen, oder anderen Systemen, nutzt eine geneigt liegende Archimedische Schraube die kinetische Wellenerergie, der an den Strand auflaufenden Meereswellen effizient und simpel aus. Durch die Schubkraft der Meereswellen in Ufernähe, die das Wasser auf die Schneckengänge asübt, gerät die Archimedische Schraube in eine Rotation, wodurch ein Generator angetrieben wird, welcher elektrischen Strom erzeugt. Der Generator-Rotor ist mit der Archimedschen Schraube gekoppelt. Der Generator-Stator ist mit einer Halterung am Meeresboden verbunden. Durch deren Kugelgelenk sind seitliche.-und Höhenbewegungen möglich, ohne das der Stator sich dreht. Das gleiche System wird beim Abstandshalter angewandt. Entsprechende Dichtungen, eventuelle Getriebe und Flansche ermöglichen die Zerlegung in einzeine wasserdichte Bauteile. Ein Unterwasserkabel leitet den elektrischen Strom zum Strand.

Andere Systeme nutzen nur einen Teil der kinetischen Wellenenergie aus, da dort meist nur ein Wellenhub ausgenutzt wird, während bei einer Archimedischen Schraub die horizontalen Wellen- Schubkräfte über eine längere Strecke ausgenutzt werden.
Eine Möglichkeit die Erstellungskosten wesentlich zu reduzieren gelingt dadurch, dass das Wellenkraftwerk an einem Punkt im Meeresboden verankert wird. Dieser Fixpunkt ist in sich drehbar. Mittels eines Schwimmers wird die Archimedische Schraube ir die gewünschte Neigung gebracht. Eine Abstandshalterung hält die Archimedische Schraube zusätzlich in der geneigten Lage und ermöglicht deren, in Grenzen, seitliches Ausweichen. Es erfolgt somit eine Selbstzentrierung in Wellenlaufrichtung. Der fest stehende Stromgenerator-Stator erzeugt, durch die sich drehende Mittelachsen-Rotor der Archimedischen Schraube, Elektrizität.

Durch die vorstehende Konstruktion benötigt das Wellenkraftwerk kein Eirlaufihauwerk und kann sich, selbstjustierend seitlichen Wellenbewegungen anpassen. Das Meereswellenkraftwerk ist ungefährlich für Fische, durchlässig für Sedimente und Treibgut. Auf entsprechende Getriebe, Kupplungen, Regelungen wird in dieser Beschreibung nicht eingegangen.

### Zeichnung

Wellenkraftwerk zur Erzeugung elektrischer Energie mittels Archimedischer Schraube/ Wasserkraftschnecke (unmaßstäblich)

### Einzelteile:

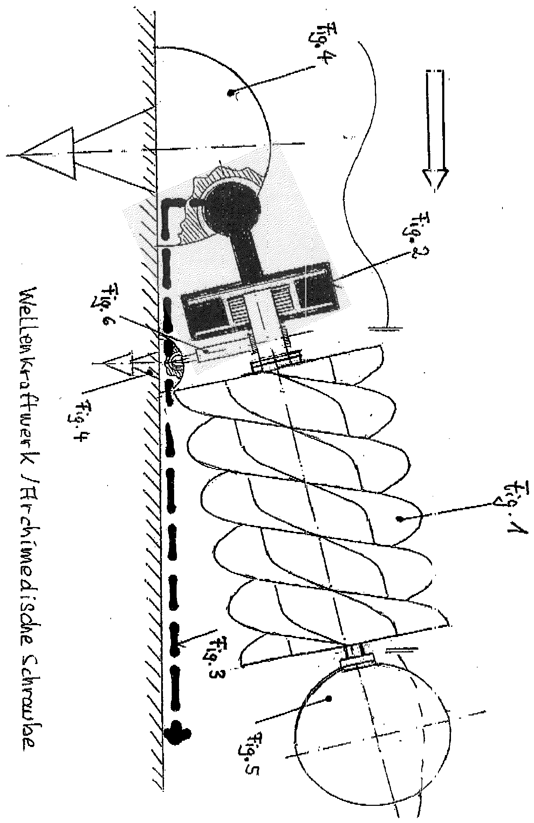

- Fig. 1: Archimedische Schraube/ Wasserkraftschnecke
- Fig. 2: Generator zur Stromerzeugung
- Fig. 3: Stromkabel
- Fig. 4: Halterung im Meeresboden
- Fig. 5: Schwimmer
- Fig. 6: Abstandshalter

## Patentansprüche

1. **Schutzanspruch 1. Wellenkraftwerk/ Archimedische Schraube**
Wellenkraftwerk nach Anspruch 1
**dadurch gekennzeichnet, dass**
eine oder mehrere Archimedischen Schrauben in horizontaler/ oder geneigter Lage as Antriebskraft zur Erzeugung elektrischer Energie, durch die Ausnutzung der kinetischen - Meereswellenenergie, genutzt wird/werden.

2. Wellenkraftwerk nach Anspruch 1
**dadurch gekennzeichnet, dass**
die Archimedische Schraube auch in konischer Form gestaltet werden kann.

3. Wellenkraftwerk nach Anspruch 1
**dadurch gekennzeichnet, dass**
Die Archimedische Schraube mit einer, oder mehreren Schraubengängen, auch mit unterbrochenen Schraubengängen und mit unterschiedlichen Schraubensteigungen ausgeführt wird

4. Wellenkraftwerk nach Anspruch 1
**dadurch gekennzeichnet, dass**
das Wellenkraftwerk an einem Fixpunkt am Meeresboden verankert ist, welcher in sich drehbar ist.

5. Wellenkraftwerk nach Anspruch 1
**dadurch gekennzeichnet, dass**
das Meereswellenkraftwerk durch einen Schwimmer in geneigter Lage gehalten wird, und/oder die Archimedische Schraube selbst als Schwimmer ausgebildet wird.

6. Wellenkraftwerk nach Anspruch 1
**dadurch gekennzeichnet, dass**
die Archimedische Schraube durch einen, im Meeresboden befestigten, Abstandshalter sich, in Grenzen, seitlichen Wellenbewegungen selbstjustierend anpasst

7. Wellenkraftwerk nach Anspruch 1
**dadurch gekennzeichnet, dass**
der Stromgenerator durch die Mitteldrehachse der Archimedischen Schraube, direkt, oder durch ein Getriebe (mit einer Kupplung und Abdichtung) angetrieben wird.

8. Wellenkraftwerk nach Anspruch 1
**dadurch gekennzeichnet, dass**
mittels eines Unterwasserstromkabels die elektrische Energie an entsprechende Nutzer ans Ufer geleitet werden kann.

9. Wellenkraftwerk nach Anspruch 1
**dadurch gekennzeichnet, dass**
mittels eines Baukastensystems, eine Multiplikation, zu einer Archimedischen Schrauben- "Modul-Batterie" erfolgten kann.

10. Wellenkraftwerk nach Anspruch 1
**dadurch gekennzeichnet, dass**
die Archimedische Schraube aus seetüchtigen Materialien gefertigt wird. Bei metallischen Materialien durch Schwachstrom eine Algenbildung auf der Archimedischen Schraube verhindert wird.
